# EUROPEAN PATENT APPLICATION

(11) **EP 4 443 604 A1**
(43) Date of publication of application: **09.10.2024**
(21) Application number: 22899734.2
(22) Date of filing: 28.02.2022
(51) Int. Cl.: H01M 10/613, H01M 50/10

(54) **LOW-TEMPERATURE-RESISTANT STAINLESS STEEL LITHIUM BATTERY CASING**

(30) Priority: 30.11.2021 CN 202111441702
(71) Applicant: China Ruilong Technology Co., Ltd, Suzhou, Jiangsu 215000 (CN)
(72) Inventor: CHEN, Haifeng, Suzhou, Jiangsu 215000 (CN)
(74) Representative: Winter, Brandl - Partnerschaft mbB
(86) International application number: PCT/CN2022/078377
(87) International publication number: WO 2023/097911

(57) **Abstract**

The present invention relates to a low-temperature-resistant stainless steel lithium battery housing, including a cover and a double-layer housing, the double-layer housing is connected to the cover, a battery cavity configured for assembling a lithium battery assembly therein being formed between the double-layer housing and the cover. The double-layer housing includes an outer housing and an inner housing, the outer housing is sleeved outside the inner housing, an outer edge of the outer housing is connected to an outer edge of the inner housing, and a vacuum interlayer is formed between an inner wall surface of the outer housing and an outer wall surface of the inner housing. According to the present invention, a corresponding vacuum layer is arranged between inner and outer housings of a stainless steel lithium battery housing to form thermal insulation for the stainless steel lithium battery. In this way, on the basis of ensuring stability of battery application performance, not reducing overall sealing performance of the battery, and not increasing processing costs of the housing, impact on battery performance caused by the low-temperature resistance problem of the stainless steel lithium battery can be reduced to a maximum extent, and it also helps to further design, in combination with corresponding thermal insulation layers and according to different requirements, a housing product that can improve the low-temperature resistance performance of the lithium battery.

## Description

### TECHNICAL FIELD

The present invention relates to the field of battery thermal insulation technologies, and in particular, to a low-temperature-resistant stainless steel lithium battery housing.

### BACKGROUND

As a sustainable green energy solution, lithium-ion battery has been increasingly widely used in people's production and life since its advent in the 1990s, ranging from button cell batteries in electronic products, lithium batteries in digital products such as mobile phones and digital computers (DCs), to power storage batteries in electric vehicles. Lithium-ion batteries have great advantages over other types of batteries in terms of volume, weight, and performance.

Therefore, different industries properly select lithium batteries within suitable voltage and capacity ranges according to application scenarios of products. It is wrong to blindly pursue an ultra-large capacity and an ultra-high voltage. More importantly, lithium batteries need to be certified by safety tests. Test standards include compressive performance, strength, and resistance to high and low temperatures of the housing. In addition, a liquid leakage status when the battery housing is struck under normal laboratory conditions also needs to be tested. Moreover, tests such as crush, impact, acceleration, vibration, thermal shock, and thermal cycle tests in mechanical tests are also important.

Clearly, regardless of types of battery products, feasibility of development of battery technologies are evaluated based on performance, and research and development of accessories related to the battery are considered only when the battery performance satisfies application requirements. The technical solution of the present invention is proposed according to this principle. First, it is found through performance tests that housing structures for lithium battery widely used in industrial electronic devices at present generally have a defect of poor low-temperature resistance in actual applications.

In the technical field, the problem of low-temperature resistance of an individual lithium battery housing has long been proposed. For example, it has been proposed that when the temperature falls below 0°C, charging of a lithium battery is difficult, and the discharge performance of the lithium battery also severely deteriorates. Both a discharge rate and a discharge capacity are greatly reduced. Therefore, research on the use of the battery in cold regions becomes urgent. In particular, when the lithium battery is charged or operates at a low temperature, or in other words, when the lithium battery is charged and discharged in a low-temperature environment, an internal resistance increases, a discharge plateau decreases, a rechargeable capacity decreases, charging and discharging efficiency of the lithium battery significantly decreases, and there is some damage to the lithium battery. For another example, in the field of electric vehicle batteries, it has been proposed that a thermal insulation box may be provided for an electric vehicle battery. An outer layer and an inner layer are provided in either of a case and a case cover. A thermal insulation layer is located between the outer layer and the inner layer of the case, so that the battery is always at an optimal operating temperature, to overcome a defect that the battery has an insufficient capacity when operating at the low temperature. For still another example, it is further considered that the problem may be further complicated and then resolved. To be specific, an intelligent temperature control system is designed to detect an environmental temperature of the lithium battery, and an upper limit value and a lower limit value of the temperature are set. If the environmental temperature of the lithium battery is lower than the lower limit value, the intelligent temperature control system heats up a heating layer of the lithium battery in an electric heating manner, to maintain the temperature of the lithium battery within the set range, to achieve normal charging and discharging at a low temperature of the external environment. However, the operation efficiency of converting electrical energy outputted by a power supply into thermal energy is very low, and a temperature regulation effect is poor, an expected temperature may not be achieved. This increases energy loss, and also easily causes waste of resources.

It is found through analysis of existing lithium battery housing technologies that, temperature characteristics of operation of the lithium battery determine additional thermal insulation measures or implementation processes that need to be added for stable operation of the lithium battery. This really increases working difficulty, has not been properly resolved so far, and has not received enough attention. Factors thereof include the following aspects:
(1) In some technical means, first, a material of a lithium battery housing is replaced or a hierarchical structure of an outer housing is added. For example, the outer housing is configured as a multi-layer structure, and some layers are mainly thermal insulation layers, to properly protect the entire battery outer housing, so that when the lithium battery is used as a main power supply or an energy storage unit in an outdoor environment, the low-temperature problem can be alleviated. However, construction costs are excessively high, and a housing processing process is burdensome. Once a layer of an inner or outer surface of the lithium battery housing is worn out, a possibility of corrosion inside the battery is increased, and system performance is easily reduced. The battery has a short life and is cumbersome to replace, which is not beneficial to energy saving and environmental protection.
(2) In some technical means, the structure of the lithium battery housing is further designed, including adding a thermal insulation structure to the outer surface or the inner surface of the lithium battery housing. This slightly serves a thermal insulation function, but brings many disadvantages. For example, because production of the battery housing needs to be completed by using a complex mold, and the housing product can provide very little thermal insulation effect to the battery, once operating in a low-temperature environment, the operating performance of the lithium battery is still significantly affected. In addition, if the inner and outer surfaces of the housing are excessively processed, a stability of the housing structure is also affected. Therefore, this method is not currently advisable.
(3) In some technical means, multiple thermal insulation design means are designed.

However, shapes of outer housings of different lithium batteries are different, for example, the lithium battery may be round or square according to an application range, a volume, a shape of the lithium battery, and the like. Therefore, the implemented technical means cost more, and cannot form a mature technical solution that can be applied to the outer housings of different shapes of the lithium batteries.

### SUMMARY

To overcome the foregoing problem or at least partially alleviate and partially resolve the foregoing problem, the present invention provides a low-temperature-resistant stainless steel lithium battery housing. Corresponding vacuum layers are arranged between inner and outer housings of the stainless steel lithium battery housing to form a thermal insulation technical solution for the stainless steel lithium battery. In this way, on the basis of ensuring stability of battery application performance, not reducing overall sealing performance of the battery, and not increasing processing costs of the housing, impact on battery performance caused by the low-temperature resistance problem of the stainless steel lithium battery can be reduced to a maximum extent, and it also helps to further design, in combination with corresponding thermal insulation layers and according to different requirements, a housing product that can improve the low-temperature resistance performance of the lithium battery.

To achieve the foregoing objective, the present invention adopts the following technical solution: A low-temperature-resistant stainless steel lithium battery housing is provided, including:
a cover; and
a double-layer housing, connected to the cover, a battery cavity configured for assembling a lithium battery assembly therein being formed between the double-layer housing and the cover,
where the double-layer housing includes an outer housing and an inner housing, the outer housing is sleeved outside the inner housing, an outer edge of the outer housing is connected to an outer edge of the inner housing, and a vacuum interlayer is formed between an inner wall surface of the outer housing and an outer wall surface of the inner housing.

Further, shapes of respective cross-sections of the outer housing and the inner housing are the same.

Further, the respective cross-sections of the outer housing and the inner housing are both rectangular or circular.

Further, an outer edge of the cover is connected to the outer edge of the inner housing, and a terminal is provided on the cover.

Further, a thermal insulation coating is arranged on the inner wall surface of the outer housing and the outer wall surface of the inner housing.

Further, a plurality of groove portions are evenly arranged from top to bottom on each of the inner wall surface of the outer housing and the outer wall surface of the inner housing.

Further, each of the groove portions on the outer housing and an adjacent one of the groove portions on the inner housing are at the same height or different heights.

Further, a plurality of groove portions are evenly arranged from top to bottom on the inner wall surface of the outer housing or the outer wall surface of the inner housing.

Further, a thickness of the vacuum interlayer ranges from 1 mm to 5 mm.

Further, a material of each of the outer housing and the inner housing is stainless steel.

Further, an explosion-proof notch is provided on a bottom surface or an outer surface of the cover.

Further, the respective cross-sections of the outer housing and the inner housing are both rectangular, the cover is also rectangular, and the explosion-proof notch is in a shape of a quarter arc; or
the respective cross-sections of the outer housing and the inner housing are both circular, the cover is also circular, and the explosion-proof notch is in a shape of a semi-circle concentric with the cover.

Further, the explosion-proof notch includes a first slope, a second slope opposite to the first slope, and a groove bottom connecting the first slope and the second slope, an opening of the explosion-proof notch has a width ranging from 0.02 mm to 0.3 mm and a depth ranging from 0.05 mm to 0.2 mm, a distance between the groove bottom and the outer surface of the cover ranges from 0.02 mm to 0.08 mm, and an angle between the first slope and the second slope ranges from 10° to 150°.

In comparison with the related art, the present invention has the following beneficial effects:
According to the present invention, a corresponding vacuum layer is arranged between inner and outer housings of a stainless steel lithium battery housing to form a thermal insulation technical solution for the stainless steel lithium battery. In this way, on the basis of ensuring stability of battery application performance, not reducing overall sealing performance of the battery, and not increasing processing costs of the housing, impact on battery performance caused by the low-temperature resistance problem of the stainless steel lithium battery can be reduced to a maximum extent, and it also helps to further design, in combination with corresponding thermal insulation layers and according to different requirements, a housing product that can improve the low-temperature resistance performance of the lithium battery.

### BRIEF DESCRIPTION OF THE DRAWINGS

The following further describes the present invention in detail based on the accompanying drawings.
FIG. 1 is a schematic three-dimensional structural diagram of a low-temperature-resistant stainless steel lithium battery housing according to Embodiment 1 of the present invention;
FIG. 2 is a top view of a low-temperature-resistant stainless steel lithium battery housing according to Embodiment 1 of the present invention;
FIG. 3 is a schematic exploded view of a low-temperature-resistant stainless steel lithium battery housing according to Embodiment 1 of the present invention;
FIG. 4 is a schematic cross-sectional view in a direction A-A of the low-temperature-resistant stainless steel lithium battery housing shown in FIG. 2;
FIG. 5 is a schematic enlarged view of a section 1A of the low-temperature-resistant stainless steel lithium battery housing shown in FIG. 4;
FIG. 6 is a schematic cross-sectional view of a low-temperature-resistant stainless steel lithium battery housing according to Embodiment 2 of the present invention;
FIG. 7 is a schematic partial diagram of a low-temperature-resistant stainless steel lithium battery housing according to Embodiment 3 of the present invention;
FIG. 8 is a schematic three-dimensional diagram of a low-temperature-resistant stainless steel lithium battery housing according to Embodiment 4 of the present invention;
FIG. 9 is a schematic exploded view of a low-temperature-resistant stainless steel lithium battery housing according to Embodiment 4 of the present invention;
FIG. 10 is a schematic diagram of a side surface of a low-temperature-resistant stainless steel lithium battery housing according to Embodiment 4 of the present invention;
FIG. 11 is a schematic cross-sectional view in a direction A-A of the low-temperature-resistant stainless steel lithium battery housing shown in FIG. 10;
FIG. 12 is a schematic enlarged view of a section 2A in FIG. 11;
FIG. 13 is a schematic diagram of a bottom surface of a housing cover according to Embodiment 5;
FIG. 14 is a cross-sectional view of an explosion-proof notch section of a cover according to Embodiment 5; and
FIG. 15 is a schematic diagram of a bottom surface of a barrel cover according to Embodiment 6.

In the drawings:
1. Housing cover;
2. outer housing;
3. inner housing;
4. aluminum terminal;
5. adhesive layer;
6. first vacuum interlayer;
7. thermal insulation outer coating;
8. thermal insulation inner coating;
9. groove portion;
10. glass terminal;
11. barrel cover;
12. outer barrel housing;
13. inner barrel housing;
14. second vacuum interlayer;
15. explosion-proof notch 1;
16. first slope;
17. second slope;
18. groove bottom;
19. bottom surface;
20. explosion-proof notch 2; and
21. outer surface.

### DETAILED DESCRIPTION

An objective to be achieved by the technical means implemented in a low-temperature-resistant stainless steel lithium battery housing to be implemented in the present invention is to resolve a problem in which a housing structure of a previously proposed stainless steel lithium battery cannot reduce impact on battery performance caused by the low-temperature resistance problem of the stainless steel lithium battery to a maximum extent, on the basis of ensuring stability of battery application performance, not reducing overall sealing performance of the battery, and not increasing processing costs of the housing.

According to the technical solutions implemented in the present disclosure, the low-temperature resistance performance of the stainless steel lithium battery is mainly improved by adding a vacuum layer at a corresponding position between inner and outer housings of a stainless steel lithium battery housing in circular, square, or another shape. Due to the addition of the vacuum layer, based on the same concept, a corresponding auxiliary structure may be additionally added according to different application requirements. However, besides these problems, due to a wide range of related lithium battery housings in the technical solutions of the present invention, it is not convenient to limit a specific size, model, and material of the lithium battery body in detail. A lithium battery to which the housing structure of the present invention can be applied can be easily implemented by a skilled person according to the technical means implemented in the present invention. Therefore, a size, a model, and a material of a lithium battery, a size and a material of a housing, a device used to form a vacuum layer, and the like are all included in conventional technical means in the art. For these conventional technical means that are not within the scope of the technical solutions of the present invention, it is not necessary to refine every detail in the specific implementations of the present invention, and it is unrealistic to list all of the details. Clearly, the technical solution implemented in the present invention is actually a stainless steel lithium battery housing structure that can be referred to and implemented by a person skilled in the art in combination with the conventional technical means. The skilled person can actually apply and test a product formed in the technical solution of the present invention according to different application conditions and use requirements, and can actually benefit from a series of advantages brought by the product. These advantages will be gradually apparent in the following parsing of the system structure.

### Embodiment 1

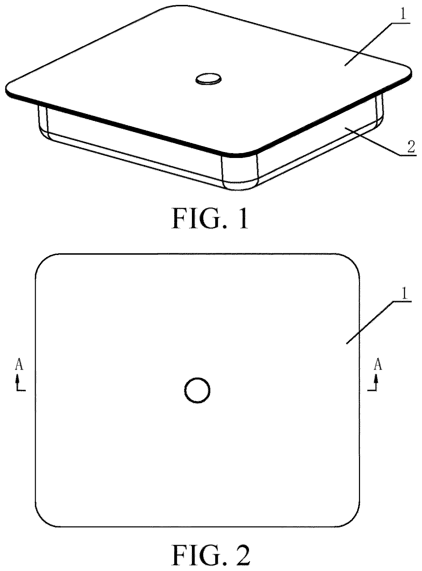

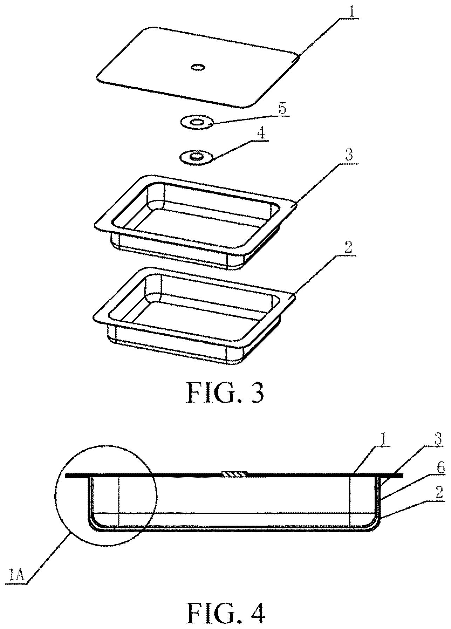

As shown in FIG. 1 to FIG. 5, for the foregoing low-temperature-resistant stainless steel lithium battery housing to be implemented, when the technical solution is applied to a square lithium battery, the housing includes a housing cover 1 (namely, a cover) with a rectangular cross-section and a double-layer housing. An aluminum terminal 4 is bonded at a central position of a bottom surface of the implemented housing cover 1 through a PP adhesive layer 5. For the adhesive layer, other types of adhesive layers may be selected according to different requirements. The double-layer housing includes an outer housing 2 made of stainless steel and an inner housing 3 made of stainless steel. The housing cover 1 is fixedly arranged above the double-layer housing and an outer edge of the housing cover 1 is compressed against an outer edge of the stainless steel inner housing 3, to form a battery cavity for accommodating a lithium battery assembly.

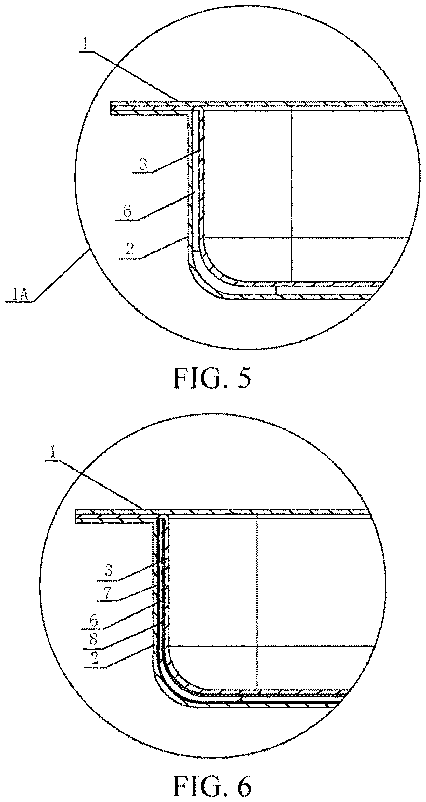

Correspondingly, because the stainless steel outer housing 2 and the stainless steel inner housing 3 are implemented in different sizes, to be specific, a length and a width of a cross-section of the stainless steel outer housing 2 are respectively greater than a length and a width of a cross-section of the stainless steel inner housing 3 in sequence, so that when the two are combined, a specific space, namely, a first vacuum interlayer 6, is formed between an outer wall surface of the stainless steel inner housing 3 and an inner wall surface of the stainless steel outer housing 2. Specifically, refer to FIG. 5. In this way, the low-temperature resistance problem of an outer housing of the stainless steel lithium battery applied in an ultra-low-temperature environment can be resolved, and the formed vacuum layer can achieve a good thermal insulation effect for the lithium battery.

Correspondingly, during specific implementation, a thickness range of the first vacuum interlayer 6 may be designed to 1 mm to 5 mm. Certainly, the range may be further expanded with reference to an application environment and thermal insulation requirements.

### Embodiment 2

As shown in FIG. 6, for the low-temperature-resistant stainless steel lithium battery housing to be implemented in the foregoing Embodiment 1, based on the same concept, the implemented vacuum layer may be combined with a corresponding auxiliary thermal insulation layer to form a technical solution that can further meet the low-temperature resistance requirement. The specific implementation is as follows:
First, an outer thermal insulation coating layer 7 is provided on the inner wall surface of the stainless steel outer housing 2, and in addition, an inner thermal insulation coating layer 8 is provided on the outer wall surface of the stainless steel inner housing 3.

Then, when the stainless steel outer housing 2 and the stainless steel inner housing 3 are combined with each other, a specific space, namely, the first vacuum interlayer 6, is formed between the outer wall surface of the stainless steel inner housing 3 and the inner wall surface of the stainless steel outer housing 2.

Clearly, on the basis of achieving the low-temperature resistance requirement by using the first vacuum interlayer 6, by implementing the thermal insulation coating, multiple thermal insulation structures can be implemented from the outside of the stainless steel outer housing 2 to the inside of the stainless steel inner housing 3, and has certain advantages.

### Embodiment 3

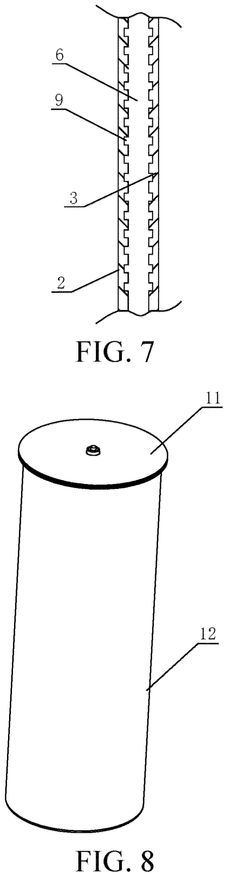

As shown in FIG. 7, for the low-temperature resistance stainless steel lithium battery housing to be implemented in the foregoing Embodiment 1 and Embodiment 2, based on the same concept, the implemented vacuum layer may form a technical solution that can further meet the low-temperature resistance requirement. The specific implementation is as follows:
First, several groove portions 9 are arranged in sequence from top to bottom on the inner wall surface of the stainless steel outer housing 2, and in addition, several groove portions 9 are also arranged in sequence from top to bottom on the outer wall surface of the stainless steel inner housing 3. Respective groove portions 9 of the inner and outer housings may be arranged at the same height or different heights. To be specific, each of the groove portions 9 on the stainless steel outer housing 2 and an adjacent one of the groove portions on the stainless steel inner housing 3 may be at the same height or different heights.

Then, when the stainless steel outer housing 2 and the stainless steel inner housing 3 are combined with each other, a specific space, namely, the first vacuum interlayer 6, is formed between the outer wall surface of the stainless steel inner housing 3 and the inner wall surface of the stainless steel outer housing 2.

Clearly, on the basis of achieving the low-temperature resistance requirement by using the first vacuum interlayer 6, by implementing the groove portion 9, multiple thermal insulation structures can be implemented from the outside of the stainless steel outer housing 2 to the inside of the stainless steel inner housing 3, and has certain advantages.

In addition, multiple thermal insulation structures may be implemented by combining technical means of the first vacuum interlayer 6, the thermal insulation coating, and the groove portion 9.

### Embodiment 4

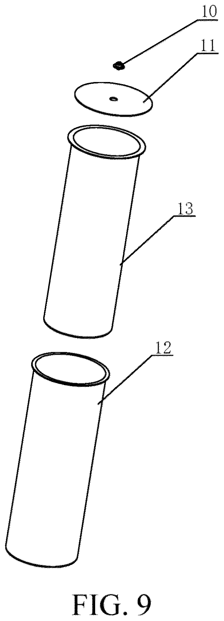

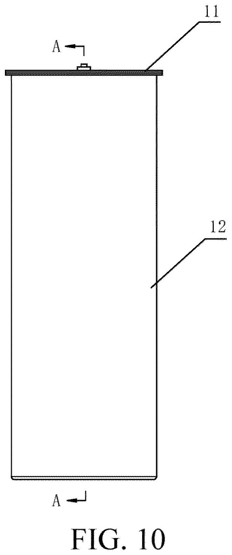

As shown in FIG. 8 to FIG. 12, for the foregoing low-temperature-resistant stainless steel lithium battery housing to be implemented, when the technical solution is applied to a cylindrical lithium battery, the housing includes a barrel cover 11 (namely, the cover) with a circular cross-section and a double-layer housing. A glass terminal 10 is provided at a central position of the implemented barrel cover 11, and is applicable to a glass encapsulation solution of the lithium battery. The double-layer case includes an outer barrel housing 12 (namely, the outer housing) and an inner barrel housing 13 (namely, the inner housing). The barrel cover 11 is fixedly arranged above the double-layer housing and an outer edge of the barrel cover 11 is compressed against an outer edge of the inner barrel housing 13, to form a cylindrical battery cavity for accommodating a lithium battery assembly.

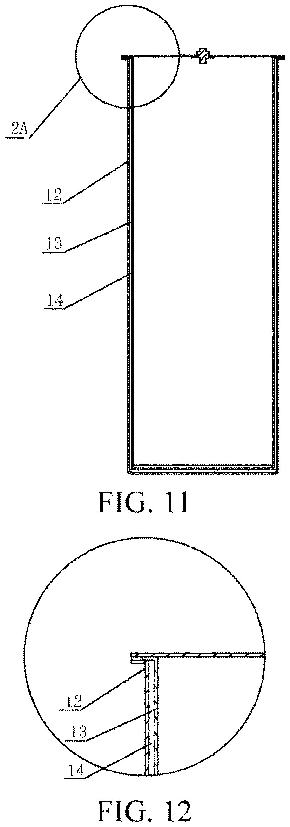

Correspondingly, because the stainless steel outer barrel housing 12 and the stainless steel inner barrel housing 13 are implemented in different sizes, to be specific, a diameter of a cross-section of the stainless steel outer barrel housing 12 is greater than a diameter of a cross-section of the stainless steel inner barrel housing 13, so that when the two are combined, a specific space, namely, a second vacuum interlayer 14, is formed between an outer wall surface of the stainless steel inner barrel housing 13 and an inner wall surface of the stainless steel outer barrel housing 12. Specifically, refer to FIG. 11 and FIG. 12. In this way, the low-temperature resistance problem of an outer housing of the stainless steel lithium battery applied in an ultra-low-temperature environment can be resolved, and the formed vacuum layer can achieve a good thermal insulation effect for the lithium battery.

In addition, technical means of the second vacuum interlayer 14, the thermal insulation coating, and the groove portion 9 may also be combined to implement multiple thermal insulation structures for the cylindrical lithium battery housing. The combination of specific technical means is the same as the square structure implemented above. Details are not described herein again.

### Embodiment 5

Embodiment 5 is an improvement based on Embodiment 1, Embodiment 2, or Embodiment 3. In Embodiment 5, a first explosion-proof notch 15 is provided on the housing cover 1. The first explosion-proof notch 15 may be processed and formed through a laser or chemical corrosion method. When a pressure in the battery increases, because a corresponding material at the first explosion-proof notch 15 is weaker, under a specific pressure, the housing cover 1 may be broken at the first explosion-proof notch 15, thereby achieving pressure relief, preventing explosion due to an excessive pressure, and being safer. The first explosion-proof notch 15 may be arranged on a bottom surface 19 of the housing cover 1 or arranged on an outer surface 21 of the housing cover 1.

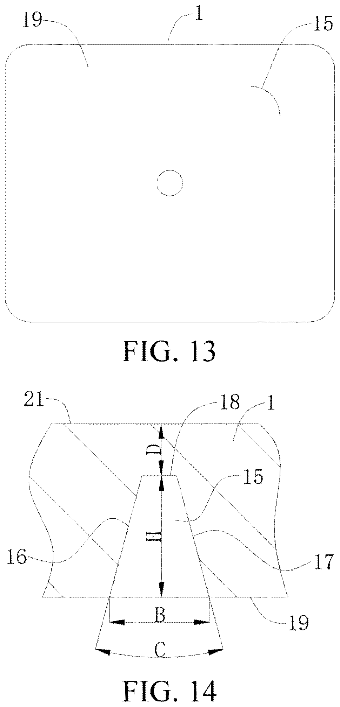

In this embodiment, respective cross-sections of the outer housing 2 and the inner housing 3 are both rectangular, and the housing cover 1 is also rectangular. Referring to FIG. 13, FIG. 13 is a schematic diagram of the bottom surface 19 of the housing cover 1. The first explosion-proof notch 15 on the housing cover 1 is in a shape of a quarter arc, and is arranged at a corner of the housing cover 1.

Referring to FIG. 14, FIG. 14 shows a cross-sectional view of a first explosion-proof notch 15. The first explosion-proof notch 15 is generally cone-shaped with an open end, and includes a first slope 16, a second slope 17 opposite to the first slope 16, and a groove bottom 18 connecting the first slope 16 and the second slope 17. A distance between the first slope 16 and the second slope 17 gradually increases from the groove bottom 18 toward the bottom surface 19 of the housing cover 1. The opening of the first explosion-proof notch 15 is tapered from outside to inside. An opening of the first explosion-proof notch 15 has a width B ranging from 0.02 mm to 0.3 mm and a depth H ranging from 0.05 mm to 0.2 mm, a distance D between the groove bottom 18 and the outer surface 21 of the housing cover 1 ranges from 0.02 mm to 0.08 mm (preferably, the distance D is 0.05 mm), and an angle C between the first slope 16 and the second slope 17 ranges from 10° to 150°. Under the parameter condition, a bursting limit of the first explosion-proof notch 15 ranges from 0.01 MPa to 1 MPa, and a bursting pressure may be adjusted by adjusting the width B, the depth H, the distance D, and the angle C. For example, in an implementation, a thickness of the housing cover 1 is 0.1 mm, a laser-processed first explosion-proof notch 15 has a width B ranging from 0.12 mm to 0.13 mm and a depth H ranging from 0.065 mm to 0.075 mm. A corresponding material thickness (namely, a distance D) of the housing cover 1 at the first explosion-proof notch 15 ranges from 0.025 mm to 0.035 mm, an angle C is 68°, and a corresponding actual explosion pressure value ranges from 0.1 MPa to 0.3 MPa.

### Embodiment 6

Embodiment 6 is an improvement based on Embodiment 4. In this embodiment, a second explosion-proof notch 20 is provided on the barrel cover 11. The second explosion-proof notch 20 may be processed and formed through a laser or chemical corrosion method. When a pressure in the battery increases, because a corresponding material at the second explosion-proof notch 20 is weaker, under a specific pressure, the barrel cover 11 may be broken at the second explosion-proof notch 20, thereby achieving pressure relief, preventing explosion due to an excessive pressure, and being safer.

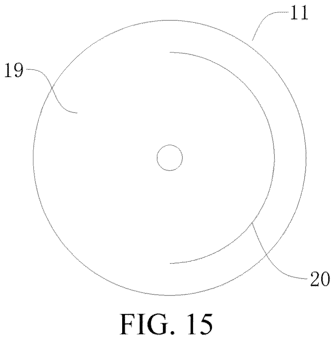

In this embodiment, respective cross-sections of the outer barrel housing 12 and the inner barrel housing 13 are both circular, and the barrel cover 11 is also circular. Referring to FIG. 15, FIG. 15 is a schematic diagram of the bottom surface 19 of the housing cover 11. The second explosion-proof notch 20 on the barrel cover 11 is in a shape of a semicircle arranged coaxial with the barrel cover 11.

The cross-sectional shape and parameters (including an opening width B, a depth H, a distance D, an angle C, and the like) of the second explosion-proof notch 20 in this embodiment are the same as those of the first explosion-proof notch 15 in Embodiment 5.

Based on the foregoing analysis, in the technical solutions of the present invention, the low-temperature resistance technologies of lithium battery housing are further developed through experience of actual application and based on existing well-known technologies and the implemented technical means. To be specific, based on a stainless steel lithium battery housing, a corresponding vacuum layer is arranged between inner and outer housings to form a basic technical solution for the thermal insulation technology of the stainless steel lithium battery housing. On the basis of ensuring stability of battery application performance, not reducing overall sealing performance of the battery, and not increasing processing costs of the housing, the technical solution can reduce impact on battery performance caused by the low-temperature resistance problem of the stainless steel lithium battery to a maximum extent, and also helps to further design, in combination with corresponding thermal insulation layers and according to different requirements, a housing product that can improve the low-temperature resistance performance of the lithium battery, so that service life of the battery housing and the overall lithium battery can be further extended. Therefore, the proposed technical solutions can alleviate, partially resolve, or completely resolve the problems existing in the related art. In addition, the proposed technical solutions of the present invention also aim to meet the low-temperature resistance requirements of a person skilled in the art of low-temperature resistance of a lithium battery for the battery when applying an electronic device.

In the descriptions of this specification, if descriptions such as terms "Embodiment 1", "this embodiment", "specific implementation" appear, it means that a specific feature, structure, material, or characteristic described with reference to the embodiment or example is included in the present invention or at least one embodiment or example of the present invention. In this specification, schematic descriptions of the foregoing terms do not necessarily refer to the same embodiment or example. In addition, the described specific features, structures, materials, or characteristics may be combined in an appropriate manner in any one or more embodiments or examples.

In the descriptions of this specification, the terms "connect", "mount", "fix", "set", "have", and the like are all broadly understood. For example, "connection" may be fixed connection or indirectly performed through an intermediate component without affecting a relationship between components and the technical effect, or may be integrated connection or partial connection. For a case similar to this example, a person of ordinary skill in the art may understand specific meanings of the foregoing terms in the present invention according to specific cases.

The foregoing descriptions of the embodiments are for ease of understanding and application by a person of ordinary skill in the art. A person skilled in the art can readily make various modifications to the examples, and apply the general principles described herein to other embodiments without creative efforts. Therefore, the present disclosure is not limited to the foregoing embodiments, and modifications in the following several cases shall fall within the protection scope of the present disclosure: (1) a new technical solution implemented based on the technical solutions of the present invention and in combination with the existing common general knowledge, where technical effects brought by the new technical solution do not exceed the technical effects of the present invention, for example, a technical solution of using a double-layer housing to form a vacuum interlayer is used as a low-temperature resistance technical solution for a stainless steel lithium battery housing, and produced expected effects do not exceed the present invention; (2) equivalent replacement of some features of the technical solutions of the present invention, such as equivalent replacement of a size, a model, or the like of a lithium battery, by using well-known technologies, where technical effects brought by the equivalent replacement are the same as the technical effects of the present invention; (3) expansion based on the technical solutions of the present invention, where substantial content of the expanded technical solutions does not exceed the technical solutions of the present invention; and (4) solutions in other related technical fields to which the obtained technical means is applied based on equivalent transformations made in the described content in the specification of the present invention.

## Claims

1. A low-temperature-resistant stainless steel lithium battery housing, comprising:
a cover; and
a double-layer housing, connected to the cover, a battery cavity configured for assembling a lithium battery assembly therein being formed between the double-layer housing and the cover,
wherein the double-layer housing comprises an outer housing and an inner housing, the outer housing is sleeved outside the inner housing, an outer edge of the outer housing is connected to an outer edge of the inner housing, and a vacuum interlayer is formed between an inner wall surface of the outer housing and an outer wall surface of the inner housing.

2. The low-temperature-resistant stainless steel lithium battery housing according to claim 1, wherein shapes of respective cross-sections of the outer housing and the inner housing are the same.

3. The low-temperature-resistant stainless steel lithium battery housing according to claim 2, wherein the respective cross-sections of the outer housing and the inner housing are both rectangular or circular.

4. The low-temperature-resistant stainless steel lithium battery housing according to claim 1, wherein an outer edge of the cover is connected to the outer edge of the inner housing, and a terminal is provided on the cover.

5. The low-temperature-resistant stainless steel lithium battery housing according to any one of claims 1 to 4, wherein a thermal insulation coating is arranged on the inner wall surface of the outer housing and the outer wall surface of the inner housing.

6. The low-temperature-resistant stainless steel lithium battery housing according to any one of claims 1 to 4, wherein a plurality of groove portions are evenly arranged from top to bottom on each of the inner wall surface of the outer housing and the outer wall surface of the inner housing.

7. The low-temperature-resistant stainless steel lithium battery housing according to claim 6, wherein each of the groove portions on the outer housing and an adjacent one of groove portions on the inner housing are at the same height or different heights.

8. The low-temperature-resistant stainless steel lithium battery housing according to any one of claims 1 to 4, wherein a plurality of groove portions are evenly arranged from top to bottom on the inner wall surface of the outer housing or the outer wall surface of the inner housing.

9. The low-temperature-resistant stainless steel lithium battery housing according to any one of claims 1 to 4, wherein a thickness of the vacuum interlayer ranges from 1 mm to 5 mm.

10. The low-temperature-resistant stainless steel lithium battery housing according to any one of claims 1 to 4, wherein the outer housing and the inner housing are made of a material comprising stainless steel.

11. The low-temperature-resistant stainless steel lithium battery housing according to any one of claims 1 to 4, wherein an explosion-proof notch is provided on a bottom surface or an outer surface of the cover.

12. The low-temperature-resistant stainless steel lithium battery housing according to claim 11, wherein the respective cross-sections of the outer housing and the inner housing are both rectangular, the cover is rectangular, and the explosion-proof notch is in a shape of a quarter arc; or
the respective cross-sections of the outer housing and the inner housing are both circular, the cover is circular, and the explosion-proof notch is in a shape of a semi-circle concentric with the cover.

13. The low-temperature-resistant stainless steel lithium battery housing according to claim 11, wherein the explosion-proof notch comprises a first slope, a second slope opposite to the first slope, and a groove bottom connecting the first slope and the second slope, an opening of the explosion-proof notch has a width ranging from 0.02 mm to 0.3 mm and a depth ranging from 0.05 mm to 0.2 mm, a distance between the groove bottom and the outer surface of the cover ranges from 0.02 mm to 0.08 mm, and an angle between the first slope and the second slope ranges from 10° to 150°.
